# EUROPÄISCHE PATENTSCHRIFT

(11) **EP 3 478 976 B1**
(45) Veröffentlichungstag und Bekanntmachung des Hinweises auf die Patenterteilung: **02.09.2020**
(21) Anmeldenummer: 17736644.0
(22) Anmeldetag: 04.07.2017
(51) Int. Cl.: F16C 11/06

(54) **VERBINDUNGSEINRICHTUNG**
MECHANICAL JOINING DEVICE
ACCOUPLEMENT

(30) Priorität: 04.07.2016 LU 93139
(43) Veröffentlichungstag der Anmeldung: 08.05.2019
(73) Patentinhaber: Phoenix Feinbau GmbH & Co. KG, 58511 Lüdenscheid (DE)
(72) Erfinder: GRUSS, Dominic, 58313 Herdecke (DE); NOLDA, Thorsten, 58849 Herscheid (DE)
(74) Vertreter: Gesthuysen Patent- und Rechtsanwälte
(86) Internationale Anmeldenummer: PCT/EP2017/066617
(87) Internationale Veröffentlichungsnummer: WO 2018/007374

(56) Entgegenhaltungen:
- DE-A1- 19 833 030
- DE-A1-102012 013 568
- DE-U1- 20 112 773
- US-A- 4 704 043
- US-A- 5 411 445

## Beschreibung

Die Erfindung betrifft eine Kupplung zur Verbindung eines Linearantriebs mit einem linear geführten Schieberelement.

Zur Verbindung eines festmontierten Linearantriebs mit einem linear geführten Schieberelement, beispielsweise einem Stanzwerkzeug, werden Kupplungen verwendet, die korrespondierend zur Antriebsrichtung auch als Linearkupplungen bezeichnet werden. Für eine präzise Positionierung des Schieberelements ist dabei eine axial starre und möglichst spielfreie Kupplung zwischen dem Linearantrieb und dem Schieberelement erforderlich. Darüber hinaus soll die Kupplung sowohl einen Fluchtungsfehler als auch einen senkrecht zur Richtung der Linearbewegung auftretenden Versatz zwischen dem Antrieb und dem Abtrieb, d. h. dem Schieberelement, möglichst verspannungsfrei ausgleichen können.

Aus der Praxis ist eine axial spielfreie Linearkupplung bekannt, die antriebsseitig aus einer scheibenförmigen Nabe mit einem Gewindezapfen und abtriebsseitig aus einer scheibenförmigen Nabe mit einem Innengewinde bestet. Die beiden Kupplungsnaben sind über vier jeweils um 90° zueinander versetzt angeordnete flache Ausgleichsfedern miteinander verbunden. Durch die Ausgleichsfedern kann dabei sowohl ein lateraler Versatz als auch ein Fluchtungsfehler zwischen dem Antrieb und dem Abtrieb ausgeglichen werden, der durch das radiale Spiel zwischen den beiden Kupplungsnaben begrenzt ist. Die Verbindung dieser Linearkupplung mit dem Antrieb und dem Abtrieb erfolgt dabei sowohl auf der Antriebsseite als auch auf der Abtriebsseite über Verschraubungen, so dass die Montage relativ aufwendig ist und entsprechendes Werkzeug erfordert. Außerdem ist zur Montage der Linearkupplung eine Bewegung des Linearantriebs oder des Schieberelements in Richtung der Linearbewegung erforderlich.

Die DE 10 2012 013 568 A1 offenbart eine Verbindungseinrichtung bzw. eine Kupplung mit einem Kugelgelenk und einem Schubgelenk. Der Kugelkopf, des Kugelgelenks kann über einen Schlitz des einteiligen Gehäuses in die Aufnahme für den Kugelkopf eingeführt werden und wird anschließend dort befestigt.

Die DE 198 33 030 A1 offenbart einen Kugelpfannenverbinder zur Verbindung von relativ stationären Gliedern mit relativ beweglichen Gliedern. Der Kugelpfannenverbinder weist ein Gehäuse auf. In diesem Gehäuse ist ein innerer Hohlraum als Gelenkpfanne ausgebildet, in den ein Kugelbolzen mit einem Kugelkopf eingesetzt werden kann. Zur Befestigung der Kugel in dem inneren Hohlraum ist eine auf dem Gehäuse verschiebbar gelagerte Kugelhalteplatte vorgesehen, die über den inneren Hohlraum geschoben werden kann.

Die DE 201 12 773 U1 offenbart eine Seil-Anschlussvorrichtung, bei der zwei Seile mittels Verhakung miteinander verbunden werden.

Aus der US 4,704,043 A ist eine Kupplung zur Übertragung von Zug- oder Druckkräften bekannt, die aus einem Gehäuse und zwei über das Gehäuse miteinander verbundene Pendellager besteht. Die Kugelelemente der Pendellager sind dabei jeweils über ein im Gehäuse eingeschraubtes Laufringelement im Gehäuse gelagert. Durch die Verwendung von zwei Pendellagern können Fehlausrichtungen zwischen den beiden über die Kupplung miteinander verbundenen Bauteilen ausgeglichen werden. Auch bei dieser Kupplung ist jedoch die Montage durch das Einschrauben der Laufringelemente in das Gehäuse relativ aufwendig. Darüber hinaus kann mit dieser Kupplung kein lateraler Versatz zwischen Antrieb und Abtrieb ausgeglichen werden.

Der vorliegenden Erfindung liegt daher die Aufgabe zugrunde, eine axial steife Kupplung zur Verbindung eines Linearantriebs mit einem linear geführten Schieberelement zur Verfügung zu stellen, die bei möglichst einfacher Montage den Ausgleich eines Fluchtungsfehlers sowie eines lateralen Versatzes zwischen der Antriebsseite und der Abtriebsseite ermöglicht. Diese Aufgabe ist bei der erfindungsgemäßen Kupplung mit den Merkmalen des Patentanspruchs 1 dadurch gelöst, dass die Kupplung ein Kupplungsmittelstück, ein Kugelgelenk und ein Schubgelenk aufweist, wobei das Kugelgelenk und das Schubgelenk auf einander gegenüberliegenden Seiten der Kupplung angeordnet sind. Fluchtungsfehler können dabei durch das Kugelgelenk ausgeglichen werden, während der Ausgleich eines lateralen Versatzes durch das Schubgelenk ermöglicht wird.

Das Kugelgelenk und das Schubgelenk weisen jeweils einen Gelenkkopf und eine korrespondierende Gelenkkopfaufnahme auf, wobei im montierten Zustand der Kupplung jeweils ein Gelenkkopf in der zugeordneten Gelenkkopfaufnahme gelagert ist. Zur einfachen Montage der Kupplung bzw. zur einfachen Verbindung der Kupplung mit dem Linearantrieb und dem Schieberelement ist der Aufnahmeraum der Gelenkkopfaufnahme des Schubgelenks oder sind der Aufnahmeraum der Gelenkkopfaufnahme des Schubgelenks und der Aufnahmeraum der Gelenkkopfaufnahme des Kugelgelenks senkrecht zur Längsachse der Kupplung zumindest einseitig offen. Vorzugsweise sind sowohl der Aufnahmeraum der Gelenkkopfaufnahme des Kugelgelenks als auch der Aufnahmeraum der Gelenkkopfaufnahme des Schubgelenks zu beiden Seiten offen, so dass der Gelenkkopf des Kugelgelenks bzw. der Gelenkkopf des Schubgelenks einfach durch eine gradlinige Steckbewegung quer zur Richtung der Linearbewegung, d. h. quer zur Längsachse der Kupplung, in die jeweile Gelenkkopfaufnahme eingeführt werden kann.

Gemäß einer vorteilhaften Ausgestaltung der erfindungsgemäßen Kupplung weist das Schubgelenk zwei translatorische Freiheitsgrade senkrecht zur Längsachse der Kupplung, d. h. senkrecht zur Richtung der Linearbewegung auf. Dadurch ist ein Ausgleich eines Versatzes zwischen dem Schieberelement und dem Linearantrieb in beiden Achsen senkrecht zur Richtung der Linearbewegung möglich. Das Kugelgelenk weist gemäß einer weiteren vorteilhaften Ausgestaltung mindestens zwei rotatorische Freiheitsgrade auf, wobei die Achsen der dadurch möglichen Ausgleichsbewegung beide senkrecht zur Längsachse der Kupplung verlaufen. Dadurch ist eine Schwenkbewegung zum Ausgleich von Fluchtungsfehlern sowohl in horizontaler als auch in vertikaler Ebene möglich.

Gemäß einer weiteren bevorzugten Ausgestaltung der erfindungsgemäßen Kupplung sind das Kugelgelenk und das Schubgelenk darüber hinaus jeweils so ausgebildet, dass sie beide auch einen rotatorischen Freiheitsgrad um die Längsachse der Kupplung aufweisen. Durch diesen rotatorischen Freiheitsgrad ist das Kupplungsmittelstück relativ zum Antrieb und zum Abtrieb, d. h. zum Linearantrieb und zum Schieberelement, um die Achse der Linearbewegung frei drehbar, so dass eine einfache Montage des Kupplungsmittelstücks unabhängig von der Ausrichtung des Kupplungsmittelstücks um die Längsachse möglich ist.

Bezüglich der konkreten konstruktiven Ausgestaltung sowohl des Kupplungsmittelstücks als auch des Kugelgelenks und des Schubgelenks gibt es unterschiedliche Möglichkeiten. Gemäß einer bevorzugten Ausführungsform sind die Gelenkkopfaufnahme des Kugelgelenks und die Gelenkkopfaufnahme des Schubgelenks beide im Kupplungsmittelstück ausgebildet während der Gelenkkopf des Kugelgelenks und der Gelenkkopf des Schubgelenks jeweils mit einem Anschlusszapfen verbunden bzw. an einem Anschlusszapfen ausgebildet sind. Das Kupplungsmittelstück weist dann auf einer Seite die Gelenkkopfaufnahme des Kugelgelenks und auf der anderen, gegenüberliegenden Seite die Gelenkkopfaufnahme des Schubgelenks auf, so dass das Kupplungsmittelstück einfach durch eine gradlinige Steckbewegung quer zur Längsachse auf die Gelenkköpfe von Kugelgelenk und Schubgelenk aufgeschoben werden kann, wenn die beiden Gelenkköpfe mit einem entsprechenden Abstand in Richtung der Linearbewegung zueinander angeordnet sind. Die beiden Gelenkköpfe können dabei mittels ihres Anschlusszapfens mit dem Linearantrieb bzw. mit dem Schieberelement verbunden sein, wozu die Anschlusszapfen beispielsweise beide ein Gewinde, insbesondere ein Außengewinde aufweisen können.

Gemäß einer alternativen Ausführungsform sind der Gelenkkopf des Kugelgelenks und der Gelenkkopf des Schubgelenks am Kupplungsmittelstück ausgebildet, während die Gelenkkopfaufnahme des Kugelgelenks und die Gelenkkopfaufnahme des Schubgelenks jeweils mit einem Anschlusszapfen verbunden sind. Die Anordnung der Elemente der beiden Gelenke ist dann im Vergleich zum zuvor beschriebenen Ausführungsbeispiel vertauscht. Selbstverständlich ist es auch möglich, dass eine Kombination der beiden zuvor beschriebenen Ausführungsvarianten realisiert ist, am Kupplungsmittelstück beispielsweise die Gelenkkopfaufnahme des Kugelgelenks und der Gelenkkopf des Schubgelenks ausgebildet sind, während dann der Gelenkkopf und des Kugelgelenks und die Gelenkkopfaufnahme des Schubgelenks jeweils einen Anschlusszapfen aufweisen bzw. mit einem Anschlusszapfen verbunden sind.

Zur Realisierung der axial steifen und möglichst spielfreien Linearkupplung ist die Passung zwischen dem Gelenkkopf und der Gelenkkopfaufnahme des Kugelgelenks möglichst spielfrei ausgelegt. Hierdurch wird eine Verschiebung zwischen dem Gelenkkopfund der Gelenkkopfaufnahme in Richtung der Längsachse der Kupplung, d. h. in Richtung der Linearbewegung verhindert, dennoch aber der Ausgleich von Fluchtungsfehlern, d. h. eines angularen Versatzes ermöglicht. Auch die Passung zwischen dem Gelenkkopf und der Gelenkkopfaufnahme des Schubgelenks ist in Richtung der Längsachse der Kupplung vorzugsweise spielfrei ausgelegt. Senkrecht zur Längsachse der Kupplung ist die Passung zwischen dem Gelenkkopf und der Gelenckopfaufnahme des Schubgelenks dagegen mit Spiel ausgelegt, wodurch der Ausgleich eines lateralen Versatzes entsprechend der Größe des Spiels möglich ist.

Sowohl der Gelenkkopf des Kugelgelenks als auch der Gelenkkopf des Schubgelenks können unterschiedliche geometrische Formen aufweisen. Der Gelenkkopft des Kugelgelenkts kann dabei insbesondere kugelförmig oder Scheibenförmig ausgebildet sein. solange der Gelenkkopf zusammen mit der Gelenkkopfaufnahme die vorzugsweise zwei translatorischen Freiheitsgrade ermöglicht. Der Gelenkkopf und die Gelenkkopfaufnahme des Schubgelenks sind vorzugsweise im Längsschnitt jeweils T-förmig ausgebildet, wobei die Erstreckung der Gelenkkopfaufnahme senkrecht zur Längsachse der Kupplung größer ist als die entsprechende Erstreckung des Gelenkkopfes, d. h. die Erstreckung des Gelenkkopfes senkrecht zur Längsachse. Das Spiel zwischen dem Gelenkkopf und der Gelenkkopfaufnahme senkrecht zur Längsachse der Kupplung wird dann durch den entsprechenden Längenunterschied zwischen der Gelenkkopfaufnahme und dem Gelenkkopf senkrecht zur Längsachse der Kupplung bestimmt, wobei dieser Längenunterschied auch den größtmöglichen Versatz festlegt, der durch das Schubgelenk ausgeglichen werden kann.

Um zu vermeiden, dass durch die einfache Montage der Kupplung mit dem Linearantrieb einerseits und dem Schieberelement andererseits ein ungewolltes Lösen der Kupplung insbesondere im Betrieb erfolgen kann, ist zwischen den beiden Elementen mindestens eines der beiden Gelenke, d. h. zwischen dem Gelenkkopf und der Gelenkkopfaufnahme des Kugelgelenkts oder des Schubgelenks eine form- oder kraftschlüssige Arretierung oder eine stoffschlüssige Verbindung ausgebildet. Eine Arretierung kann dabei insbesondere federbelastet ausgebildet sein, so dass die Arretierung bei der Montage automatisch erfolgt und dadurch nach der Montage ein ungewolltes Lösen der Kupplung verhindert. Ein gewolltes Lösen der Kupplung ist bei einer entsprechenden federbelasteten Arretierung jedoch nach wie vor möglich. Eine stoffschlüssige Verbindung der beiden Elemente eines Gelenks kann beispielsweise dadurch realisiert werden, dass die Innenmantelfläche der Aufnahme oder die Außenfläche des Gelenkkopfes eine Gummierung aufweist. Schließlich kann ein ungewolltes Lösen der Kupplung auch dadurch verhindert werden, dass der Aufnahmeraum der Gelenkkopfaufnahme des Kugelgelenks und/oder des Schubgelenks mittels einer entsprechenden Abdeckung zumindest teilweise verschlossen ist, so dass der Gelenkkopf nicht aus dem entsprechenden Aufnahmeraum herausgleiten kann.

Im Einzelnen gibt es nun eine Vielzahl von Möglichkeiten, die erfindungsgemäße Kupplung auszugestalten und weiterzubilden. Dazu wird verwiesen sowohl auf die dem Patentanspruch 1 nachgeordneten Patentansprüche als auch auf die nachfolgende Beschreibung von Ausführungsbeispielen in Verbindung mit der Zeichnung. In der Zeichnung zeigen
- Fig. 1: eine perspektivische Darstellung einer erfindungsgemäßen Kupplung zur Verbindung eines Linearantriebs mit einem linear geführten Schieberelement,
- Fig. 2: die Kupplung zur Verbindung eines Linearantriebs mit einem Schieberelement gemäß Fig. 1, im Schnitt,
- Fig. 3: eine vergrößerte Darstellung der Kupplung gemäß den Fig. 1 und 2, teilweise geschnitten,
- Fig. 4: eine perspektivische Darstellung des Kupplungsmittelstücks der Kupplung gemäß Fig. 3, und
- Fig. 5: eine alternative Ausführungsform einer erfindungsgemäßen-Kupplung, in Draufsicht und in perspektivischer Darstellung.

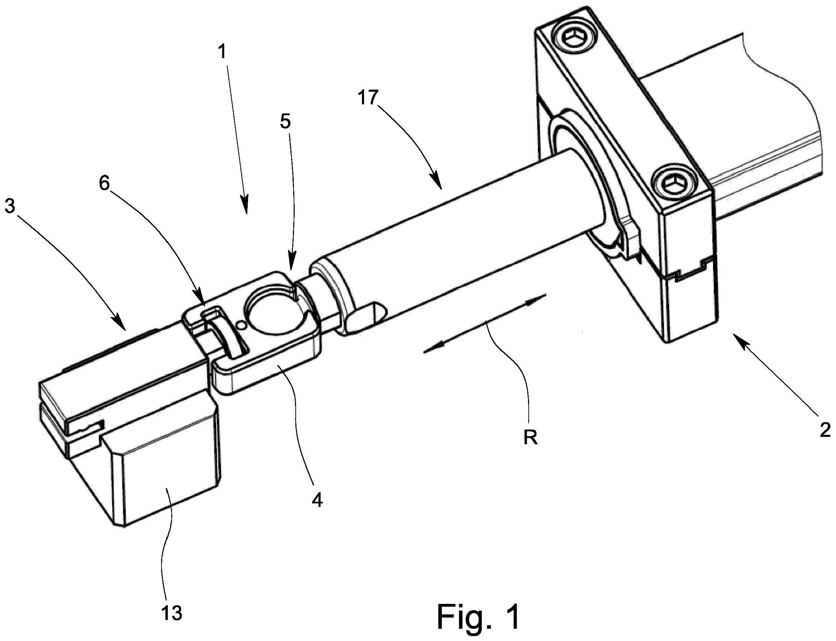

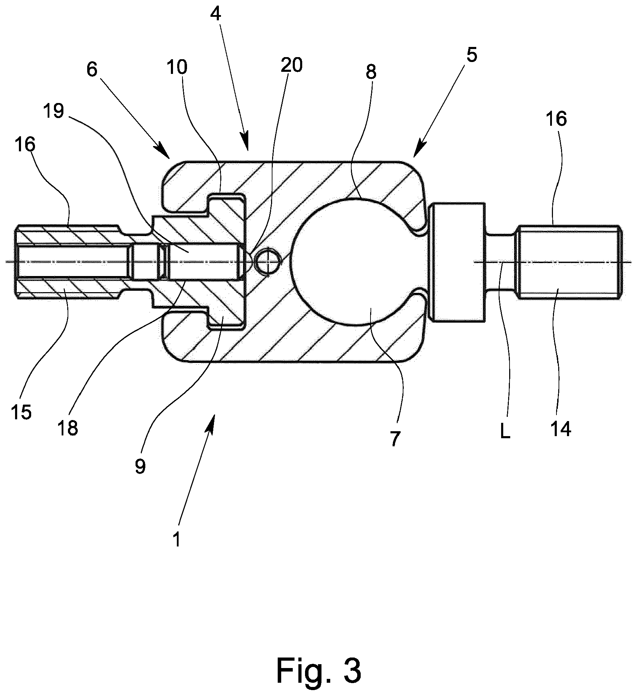

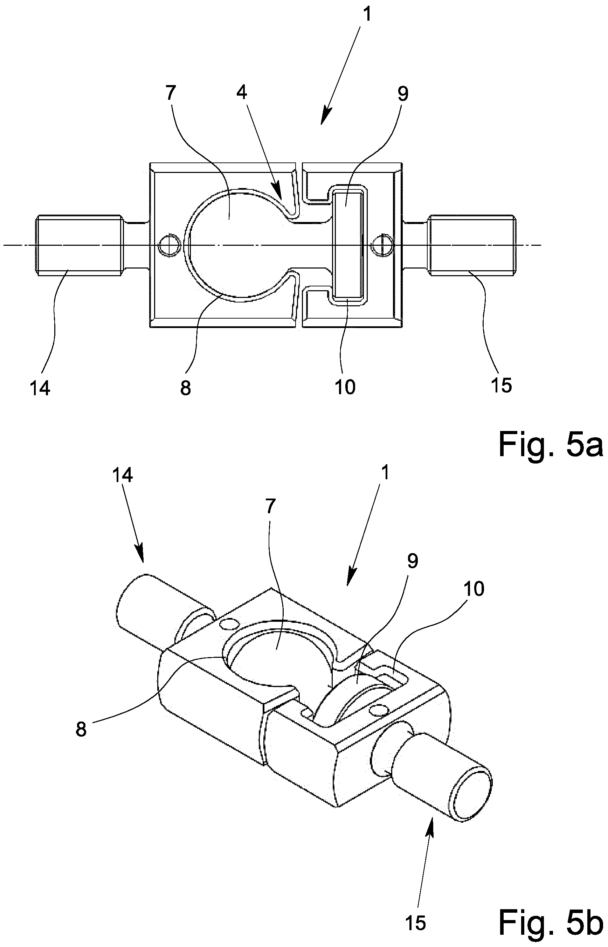

Fig. 1 zeigt eine perspektivische Darstellung einer Kupplung 1 zur Verbindung eines ausschnittsweise dargestellten Linearantriebs 2 mit einem linear geführten Schieberelement 3. Die Kupplung 1, die separat in den Fig. 3 und 5 dargestellt ist, besteht im Wesentlichen aus einem Kupplungsmittelstück 4, einem Kugelgelenk 5 und einem Schubgelenk 6, wobei das Kugelgelenk 5 und das Schubgelenk 6 auf einander gegenüberliegenden Seiten der Kupplung 1 angeordnet sind.

Das Kugelgelenk 5 besteht aus einem Gelenkkopf 7 und einer korrespondierenden Gelenkkopfaufnahme 8. Auch das Schubgelenk 6 weist einen Gelenckopf 9 und eine korrespondierende Gelenkkopfaufnahme 10 auf. Die Gelenckopfaufnahme 8 des Kugelgelenks 5 und die Gelenkkopfaufnahme 10 des Schubgelenks 6 weisen jeweils einen Aufnahmeraum 11, 12 auf, der senkrecht zur Längsachse L der Kupplung 1 beidseitig offen ist. Zum Zusammenfügen des Kugelgelenks 5 muss somit einfach das Kupplungsmittelstück 4 senkrecht zur Richtung der Linearbewegung R mit der Gelenkkopfaufnahme 8 auf den Gelenkkopf 7 aufgesteckt bzw. aufgeschoben werden. Entsprechend muss zum Zusammenfügen des Schubgelenks 6 die Gelenkkopfaufnahme 10 auf den Gelenkkopf 9 aufgesteckt bzw. aufgeschoben werden. Alternativ dazu kann das Zusammenfügen von Kugelgelenk 5 und Schubgelenk 6 auch durch eine drehende Bewegung des Kupplungsmittelstücks 4 um die Längsachs L erfolgen, bei der dann ebenfalls der jeweilige Gelenkkopf 7, 9 in die zugeordnete Gelenkkopfaufnahme 8, 10 eingeführt wird.

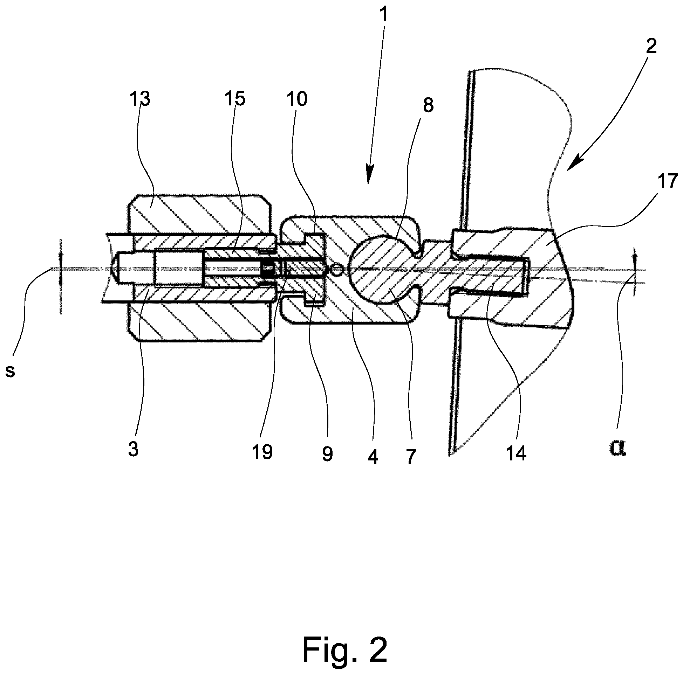

Aus der Darstellung gemäß Fig. 2 ist ersichtlich, wie mit der erfindungsgemäßen Kupplung 1 sowohl ein Fluchtungsfehler mit einem Winkel α als auch ein Versatz um eine Strecke s zwischen dem Linearantrieb 2 und dem in einer Führung 13 angeordneten Schieberelement 3 ausgeglichen werden kann. Der Ausgleich des Fluchtungsfehlers um den Winkel α erfolgt dabei durch das Kugelgelenk 5, das zwei rotatorische Freiheitsgrade aufweist, so dass eine Ausgleichsschwenkbewegung sowohl in der in der Fig. 2 dargestellten Richtung als auch senkrecht zur Zeichenebene möglich ist. Der Ausgleich eines lateralen Versatzes um die Strecke s wird durch das Schubgelenk 6 ermöglicht, dass insgesamt zwei translatorische Freiheitsgrade senkrecht zur Längsachse L der Kupplung 1 aufweist. Auch hier erstreckt sich die Achse des zweiten Freiheitsgrades senkrecht zur Zeichenebene.

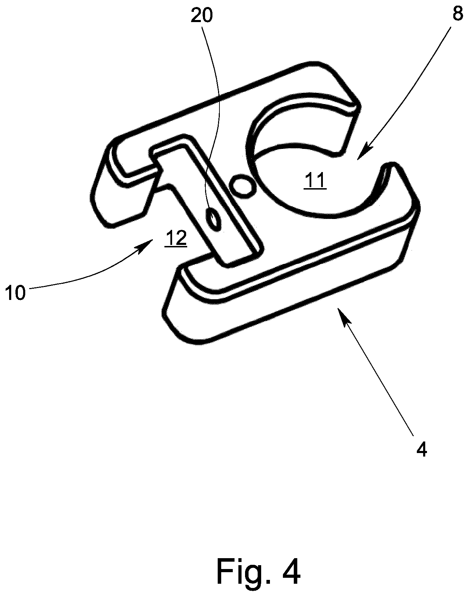

Bei der in den Fig. 1 bis 4 dargestellten bevorzugten Ausgestaltung der erfindungsgemäßen Kupplung 1 sind die Gelenkkopfaufnahmen 8, 10 beide im Kupplungsmittelstück 4 als entsprechende stirnseitig offene Nuten ausgebildet. Die beiden Gelenkköpfe 7, 9 weisen jeweils einen vom Kupplungsmittelstück 4 wegweisenden Anschlusszapfen 14, 15 auf, wobei an beiden Anschlusszapfen 14, 15 ein Außengewinde 16 ausgebildet ist, über das der Gelenkkopf 7 des Kugelgelenks 5 mit dem Anschlusszapfen 14 in der Schubstange 17 des Linearantriebs 2 und der Gelenkkopf 9 des Schubgelenks 6 mit dem Anschlusszapfen 15 in dem Schieberelement 3 eingeschraubt werden kann. Die Kupplung 1 besteht somit im Wesentlichen aus drei Bauteilen, nämlich dem Kupplungsmittelstück 4, dem Gelenkkopf 7 des Kugelgelenks 5 mit dem Anschlusszapfen 14 und dem Gelenkkopf 9 des Schubgelenks 6 mit dem Anschlusszapfen 15.

Aus der Schnittdarstellung gemäß Fig. 3 ist außerdem erkennbar, dass der Gelenkkopf 9 und die Gelenkkopfaufnahme 10 des Schubgelenks 6 im Längsschnitt jeweils T-förmig ausgebildet sind. Die Erstreckung der Gelenckopfaufnahme 10 senkrecht zur Längsachse L der Kupplung 1 ist dabei etwas größer als die entsprechende Erstreckung des Gelenkkopfes 9, so dass senkrecht zur Längsachse L der Kupplung 1 eine Verschiebung zwischen dem Gelenkkopf 9 und der Gelenkkopfaufnahme 10 und damit ein Ausgleich eines Versatzes zwischen dem Linearantrieb 2 und dem Schieberelement 3 möglich ist.

Wie aus Fig. 3 und auch aus Fig. 1 ersichtlich ist, sind der Gelenkkopf 7 und die Gelenkkopfaufnahme 8 des Kugelgelenks 5 im Längsschnitt jeweils scheibenförmig ausgebildet, wobei die Passung zwischen dem Gelenkkopf 7 und der Gelenkkopfaufnahme 8 spielfrei ausgelegt ist. Anstelle des in den Figuren dargestellten scheibenförmigen Gelenkkopfes 7 kann das Kugelgelenk 5 auch einen kugelförmigen Gelenkkopf, d. h. eine Gelenkkugel aufweisen, die dann - je nach Dicke des Kupplungsmittelstücks 4 - etwas über die Oberseite und die Unterseite des Kupplungsmittelstücks 4 herausragen kann.

Aus der Schnittdarstellung der Kupplung 1 gemäß den Fig. 2 und 3 ist darüber hinaus noch erkennbar, dass in einer Bohrung 18 im Gelenkkopf 9 ein federndes Druckstück 19 als Federelement angeordnet ist, durch das die spielfreie Anordnung des Gelenkkopfes 9 in der Gelenkkopfaufnahme 10 in Richtung der Längsachse L der Kupplung 1 sichergestellt wird. Darüber hinaus wird durch das federnde Druckstück 19 und eine dazu in der Gelenkkopfaufnahme 10 ausgebildete, korrespondierende Vertiefung 20 eine form- und kraftschlüssige Verrastung zwischen dem Gelenkkopf 9 und der Gelenkkopfaufnahme 10 realisiert, so dass ein ungewolltes Herausrutschen des Gelenckopfes 9 aus der Gelenkkopfaufnahme 10 senkrecht zur Längsachse L verhindert wird. Eine ähnliche Verrastung kann auch zwischen dem Gelenkkopf 7 und der Gelenkkopfaufnahme 8 des Kugelgelenks 5 ausgebildet sein. Alternativ dazu kann ein ungewolltes Lösen der Kupplung 1 beispielsweise auch dadurch verhindert werden, dass der Aufnahmeraum 11 der Gelenkkopfaufnahme 8 nach dem Einsetzen des Gelenkkopfes 7 mittels einer Abdeckung zumindest teilweise verschlossen wird.

Fig. 5 zeigt eine alternative Ausgestaltung der Kupplung 1, in Draufsicht (Fig. 5a) und in perspektivischer Darstellung (Fig. 5b). Bei dieser Ausführungsform der Kupplung sind der Gelenkopf 7 des Kugelgelenks 5 und der Gelenkkopf 9 des Schubgelenks 6 jeweils am Kupplungsmittelstück 4 ausgebildet. Die Gelenkkopfaufnahme 8 des Kugelgelenks 5 und die Gelenkkopfaufnahme 10 des Schubgelenks 6 sind bei dieser Ausführungsform dann jeweils mit einem Anschlusszapfen 14, 15 verbunden bzw. an einem Ende eines Anschlusszapfens 14, 15 ausgebildet.

## Patentansprüche

1. Kupplung (1) zur Verbindung eines Linearantriebs (2) mit einem linear geführten Schieberelement (3), mit einem Kupplungsmittelstück (4), mit einem Kugelgelenk (5) und mit einem Schubgelenk (6), wobei das Kugelgelenk (5) und das Schubgelenk (6) auf einander gegenüberliegenden Seiten der Kupplung (1) angeordnet sind,
wobei das Kugelgelenk (5) einen Gelenkkopf (7) und eine Gelenkkopfaufnahme (8) und das Schubgelenkt (6) einen Gelenkkopf (9) und eine Gelenckopfaufnahme (10) aufweisen, und
wobei die Gelenkkopfaufnahme (10) des Schubgelenks (6) oder die Gelenckopfaufnahme (8) des Schubgelenks (6) und die Gelenkkopfaufnahme (8) des Kugelgelenks (5) einen Aufnahmeraum (11, 12) aufweist bzw. aufweisen, der senkrecht zur Längsachse (L) der Kupplung (1) zumindest einseitig offen ist.

2. Kupplung (1) nach Anspruch 1, **dadurch gekennzeichnet, dass** das Schubgelenk (6) zwei translatorische Freiheitsgrade senkrecht zur Längsachse (L) der Kupplung (1) aufweist.

3. Kupplung (1) nach Anspruch 1 oder 2, **dadurch gekennzeichnet, dass** das Kugelgelenk (5) mindestens zwei rotatorische Freiheitsgrade um eine Achse senkrecht zur Längsachse (L) der Kupplung (1) aufweist.

4. Kupplung (1) nach einem der Ansprüche 1 bis 3, **dadurch gekennzeichnet, dass** das Kugelgelenk (5) und das Schubgelenk (6) jeweils einen rotatorischen Freiheitsgrad um die Längsachse (L) der Kupplung (1) aufweisen.

5. Kupplung (1) nach einem der Ansprüche 1 bis 4, **dadurch gekennzeichnet, dass** die Gelenkkopfaufnahme (8) des Kugelgelenks (5) und die Gelenckopfaufnahme (10) des Schubgelenks (6) im Kupplungsmittelstück (4) ausgebildet sind, und dass der Gelenkkopf (7) des Kugelgelenks (5) und der Gelenkkopf (9) des Schubgelenks (6) jeweils mit einem Anschlusszapfen (14, 15) verbunden sind.

6. Kupplung (1) nach einem der Ansprüche 1 bis 4, **dadurch gekennzeichnet, dass** der Gelenkopf (7) des Kugelgelenks (5) und der Gelenkkopf (9) des Schubgelenks (6) am Kupplungsmittelstück (4) ausgebildet sind, und dass die Gelenkkopfaufnahme (8) des Kugelgelenks (5) und die Gelenkkopfaufnahme (10) des Schubgelenks (6) jeweils mit einem Anschlusszapfen (14, 15) verbunden sind.

7. Kupplung (1) nach Anspruch 5 oder 6, **dadurch gekennzeichnet, dass** die Anschlusszapfen (14, 15) jeweils ein Gewinde, insbesondere ein Außengewinde (16), aufweisen, zur Verbindung mit dem Linearantrieb (2) bzw. mit dem Schieberelement (3).

8. Kupplung (1) nach einem der Ansprüche 1 bis 7, **dadurch gekennzeichnet, dass** die Passung zwischen dem Gelenkkopf (7) und der Gelenkkopfaufnahme (8) des Kugelgelenks (5), insbesondere in Richtung der Längsachse (L), spielfrei ausgelegt ist.

9. Kupplung (1) nach einem der Ansprüche 1 bis 8, **dadurch gekennzeichnet, dass** die Passung zwischen dem Gelenkkopf (9) und der Gelenkkopfaufnahme (10) des Schubgelenks (6) in Richtung der Längsachse (L) der Kupplung (1) spielfrei und senkrecht zur Längsachse (L) der Kupplung (1) mit Spiel ausgelegt ist.

10. Kupplung (1) nach Anspruch 9, **dadurch gekennzeichnet, dass** der Gelenkkopf (9) und die Gelenkkopfaufnahme (10) des Schubgelenks (6) im Längsschnitt jeweils T-förmig ausgebildet sind, wobei die Erstreckung der Gelenkkopfaufnahme (10) senkrecht zur Längsachse (L) der Kupplung (1) größer ist als die Erstreckung des Gelenkkopfes (9) senkrecht zur Längsachse (L) ist.

11. Kupplung (1) nach Anspruch 9 oder 10, **dadurch gekennzeichnet, dass** die Passung zwischen dem Gelenkkopf (9) und der Gelenkkopfaufnahme (10) des Schubgelenks (6) in Richtung der Längsachse (L) der Kupplung (1) mit Hilfe eines Federelements (19) spielfrei ausgebildet ist.

12. Kupplung (1) nach einem der Ansprüche 1 bis 11, **dadurch gekennzeichnet, dass** zwischen dem Gelenkkopf (7) und der Gelenkkopfaufnahme (8) des Kugelgelenks (5) und/oder zwischen dem Gelenkkopf (9) und der Gelenckopfaufnahme (10) des Schubgelenks (6) eine form- oder kraftschlüssige Arretierung oder eine stoffschlüssige Verbindung ausgebildet ist.

13. Kupplung (1) nach einem der Ansprüche 1 bis 12, **dadurch gekennzeichnet, dass** der Aufnahmeraum (11) der Gelenkkopfaufnahme (8) des Kugelgelenks (5) und/oder der Aufnahmeraum (12) der Gelenkkopfaufnahme (10) des Schubgelenks (6) mit einer Abdeckung zumindest teilweise verschließbar ist.

## Claims

1. Coupling (1) for connecting a linear drive (2) to a linearly guided slide element (3), with a coupling center piece (4), with a ball joint (5) and with a sliding joint (6), the ball joint (5) and the sliding joint (6) being arranged on opposite sides of the coupling (1),
wherein the ball joint (5) has a joint head (7) and a joint head socket (8) and the sliding joint (6) has a joint head (9) and a joint head socket (10), and
wherein the joint head socket (10) of the sliding joint (6) or the joint head socket (10) of the prismatic joint (6) and the joint head socket (8) of the ball joint (5) has or have a socket space (11, 12) which is open at least on one side perpendicularly to the longitudinal axis (L) of the coupling (1).

2. Coupling (1) according to claim 1, **characterized in that** the sliding joint (6) has two translational degrees of freedom perpendicular to the longitudinal axis (L) of the coupling (1).

3. Coupling (1) according to claim 1 or 2, **characterized in that** the ball joint (5) has at least two rotational degrees of freedom about an axis perpendicular to the longitudinal axis (L) of the coupling (1).

4. Coupling (1) according to any one of claims 1 to 3, **characterized in that** the ball joint (5) and the sliding joint (6) each have a rotational degree of freedom about an axis perpendicular to the longitudinal axis (L) of the coupling (1).

5. Coupling (1) according to any one of claims 1 to 4, **characterized in that** the joint head socket (8) of the ball joint (5) and the joint head socket (10) of the sliding joint (6) are formed in the coupling center piece (4), and that the joint head (7) of the ball joint (5) and the joint head (9) of the sliding joint (6) are each connected to a connecting journal (14, 15).

6. Coupling (1) according to any one of claims 1 to 4, **characterized in that** the joint head (7) of the ball joint (5) and the joint head (9) of the sliding joint (6) are formed on the coupling center piece (4), and that the joint head socket (8) of the ball joint (5) and the joint head socket (10) of the sliding joint (6) are each connected to a connecting journal (14, 15).

7. Coupling (1) according to claim 5 or 6, **characterized in that** the connecting journals (14, 15) each have a thread, in particular an external thread (16), for connection to the linear drive (2) or to the slide element (3).

8. Coupling (1) according to one of the claims 1 to 7, **characterized in that** the fit between the joint head (7) and the joint head socket (8) of the ball joint (5) is designed free of play, in particular in the direction of the longitudinal axis (L).

9. Coupling (1) according to any one of claims 1 to 8, **characterized in that** the fit between the joint head (9) and the joint head socket (10) of the sliding joint (6) is designed free of play in the direction of the longitudinal axis (L) of the coupling (1) and with play perpendicularly to the longitudinal axis (L) of the coupling (1).

10. Coupling (1) according to claim 9, **characterized in that** the joint head (9) and the joint head socket (10) of the sliding joint (6) are each T-shaped in longitudinal section, wherein the extension of the joint head socket (10) perpendicular to the longitudinal axis (L) of the coupling (1) is greater than the extension of the joint head (9) perpendicular to the longitudinal axis (L).

11. Coupling (1) according to claim 9 or 10, **characterized in that** the fit between the joint head (9) and the joint head socket (10) of the sliding joint (6) is formed without play in the direction of the longitudinal axis (L) of the coupling (1) with the aid of a spring element (19).

12. Coupling (1) according to any one of claims 1 to 11, **characterized in that** a form-fit or force-fit locking or a material connection is formed between the joint head (7) and the joint head socket (8) of the ball joint (5) and/or between the joint head (9) and the joint head socket (10) of the sliding joint (6).

13. Coupling (1) according to any one of claims 1 to 12, **characterized in that** the socket space (11) of the joint head socket (8) of the ball joint (5) and/or the socket space (12) of the joint head socket (10) of the sliding joint (6) can be at least partially closed with a cover.

## Revendications

1. Dispositif d'accouplement (1) destiné à relier un entraînement linéaire (2) à un élément coulissant (3) à guidage linéaire, comprenant une pièce centrale d'accouplement (4), un joint à rotule (5) et un joint à glissière (6), le joint à rotule (5) et le joint à glissière (6) étant disposés sur des côtés opposés du dispositif d'accouplement (1),
dans lequel le joint à rotule (5) présente une rotule (7) et un logement de rotule (8) et le joint à glissière (6) présente une rotule (9) et un logement de rotule (10), et
dans lequel le logement de rotule (10) du joint à glissière (6) ou le logement de rotule (10) du joint à glissière (6) et le logement de rotule (8) du joint à rotule (5) présentent un espace de réception (11, 12) ouvert au moins d'un côté perpendiculairement à l'axe longitudinal (L) du dispositif d'accouplement (1).

2. Dispositif d'accouplement (1) selon la revendication 1, **caractérisé en ce que** le joint à glissière (6) présente deux degrés de liberté en translation perpendiculairement à l'axe longitudinal (L) du dispositif d'accouplement (1).

3. Dispositif d'accouplement (1) selon la revendication 1 ou 2, **caractérisé en ce que** le joint à rotule (5) présente au moins deux degrés de liberté en rotation autour d'un axe perpendiculairement à l'axe longitudinal (L) du dispositif d'accouplement (1).

4. Dispositif d'accouplement (1) selon l'une quelconque des revendications 1 à 3, **caractérisé en ce que** le joint à rotule (5) et le joint à glissière (6) présentent respectivement un degré de liberté en rotation autour de l'axe longitudinal (L) du dispositif d'accouplement (1).

5. Dispositif d'accouplement (1) selon l'une quelconque des revendications 1 à 4, **caractérisé en ce que** le logement de rotule (8) du joint à rotule (5) et le logement de rotule (10) du joint à glissière (6) sont réalisés dans la pièce centrale d'accouplement (4), et **en ce que** la rotule (7) du joint à rotule (5) et la rotule (9) du joint à glissière (6) sont respectivement reliées à un tenon de raccordement (14, 15).

6. Dispositif d'accouplement (1) selon l'une quelconque des revendications 1 à 4, **caractérisé en ce que** la rotule (7) du joint à rotule (5) et la rotule (9) du joint à glissière (6) sont réalisées dans la pièce centrale d'accouplement (4), et **en ce que** le logement de rotule (8) du joint à rotule (5) et le logement de rotule (10) du joint à glissière (6) sont reliés respectivement à un tenon de raccordement (14, 15).

7. Dispositif d'accouplement (1) selon la revendication 5 ou 6, **caractérisé en ce que** les tenons de raccordement (14, 15) présentent respectivement un filetage, en particulier un filetage mâle (16), pour le raccordement à l'entraînement linéaire (2) ou à l'élément coulissant (3).

8. Dispositif d'accouplement (1) selon l'une quelconque des revendications 1 à 7, **caractérisé en ce que** l'ajustement entre la rotule (7) et le logement de rotule (8) du joint à rotule (5), en particulier en direction de l'axe longitudinal (L), est conçu sans jeu.

9. Dispositif d'accouplement (1) selon l'une quelconque des revendications 1 à 8, **caractérisé en ce que** l'ajustement entre la rotule (9) et le logement de rotule (10) du joint à glissière (6) est conçu sans jeu en direction de l'axe longitudinal (L) du dispositif d'accouplement (1) et est conçu avec jeu perpendiculairement à l'axe longitudinal (L) du dispositif d'accouplement (1).

10. Dispositif d'accouplement (1) selon la revendication 9, **caractérisé en ce que** la rotule (9) et le logement de rotule (10) du joint à glissière (6) sont réalisés respectivement avec une section longitudinale en forme de T, l'étendue du logement de rotule (10) perpendiculairement à l'axe longitudinal (L) du dispositif d'accouplement (1) étant supérieure à l'étendue de la rotule (9) perpendiculairement à l'axe longitudinal (L).

11. Dispositif d'accouplement (1) selon la revendication 9 ou 10, **caractérisé en ce que** l'ajustement entre la rotule (9) et le logement de rotule (10) du joint à glissière (6) est réalisé sans jeu en direction de l'axe longitudinal (L) du dispositif d'accouplement (1) à l'aide d'un élément faisant ressort (19).

12. Dispositif d'accouplement (1) selon l'une quelconque des revendications 1 à 11, **caractérisé en ce qu'**entre la rotule (7) et le logement de rotule (8) du joint à rotule (5) et/ou entre la rotule (9) et le logement de rotule (10) du joint à glissière (6) un blocage par complémentarité de forme ou par adhérence ou une liaison de matière est réalisé(e).

13. Dispositif d'accouplement (1) selon l'une quelconque des revendications 1 à 12, **caractérisé en ce que** l'espace de réception (11) du logement de rotule (8) du joint à rotule (5) et/ou l'espace de réception (12) du logement de rotule (10) du joint à glissière (6) peuvent être fermés au moins partiellement par un recouvrement.
